# EUROPÄISCHE PATENTSCHRIFT

(11) **EP 1 677 978 B1**
(45) Veröffentlichungstag und Bekanntmachung des Hinweises auf die Patenterteilung: **11.01.2012**
(21) Anmeldenummer: 04761061.3
(22) Anmeldetag: 05.10.2004
(51) Int. Cl.: B32B 27/30, B32B 27/08

(54) **MEHRSCHICHTIGER VERBUNDKÖRPER**
MULTILAYER COMPOSITE BODY
CORPS COMPOSITE A COUCHES MULTIPLES

(30) Priorität: 31.10.2003 AT 17292003
(43) Veröffentlichungstag der Anmeldung: 12.07.2006
(73) Patentinhaber: Senoplast Klepsch & Co. GmbH, 5721 Piesendorf (AT)
(72) Erfinder: KAGER, Gerhard, A-5721 Piesendorf (AT); KAPPACHER, Johann, A-5721 Piesendorf (AT); PEIS, Thomas, A-5700 Zell am See (AT)
(74) Vertreter: Schwarz & Partner
(86) Internationale Anmeldenummer: PCT/AT2004/000339
(87) Internationale Veröffentlichungsnummer: WO 2005/042248

(56) Entgegenhaltungen:
- EP-A- 0 304 679
- EP-A- 0 699 704
- EP-B- 0 781 201
- US-A- 5 061 558

## Beschreibung

Die Erfindung betrifft einen mehrschichtigen Verbundkörper, insbesondere Mehrschichtfolie, mit einer mindestens einlagigen Trägerschicht und einer von dieser getragenen PMMA-Schicht, die als Hauptkomponente Standard-PMMA, schlagzähmodifiziertes PMMA oder Mischungen davon aufweist, wobei auf die PMMA-Schicht eine zumindest einlagige Lackschicht aufgedruckt ist.

Mehrschichtige Verbundkörper sind bereits bekannt, beispielsweise zur Herstellung von Einsätzen auf dem Sanitärgebiet durch Tiefziehen (beispielsweise EP 781 201).

Aus der US 5,061,558 geht ein mehrschichtiger Verbundkörper hervor, der eine Polycarbonatträgerschicht aufweist, welche von einem Polymethylacrylatfilm bedeckt ist. Die Polymethacrylatschicht kann mit einem PMMA-Film lackiert werden.

Die EP 0 304 679 A1 offenbart eine Verbundplatte, welche eine Unterlage aus ABS, eine Schicht aus PMMA und eine PMMA enthaltende Deckschicht enthält.

Die EP 0 699 704 A1 betrifft ein Verfahren zur Herstellung von auf einem thermoplastischen Polymeren basierenden geformten Gegenständen, Platten und Folien, welche mit einem kratzfesten und abriebfesten Überzug beschichtet sind.

Die EP 0 781 201 B1 geht auf die Anmelderin selbst zurück und beschreibt eine Verbundplatte, aus welcher durch Tiefziehen ein Einsatz für Sanitärgegenstände herstellbar ist, wobei auf einer Unterlage aus ABS ein Überzug aus Acrylglas angeordnet ist. Der Überzug aus Acrylglas besteht aus einer Mischung aus schlagzähmodifiziertern PMMA und Standard PMMA.

Weiters ist aus der US 4,702,942 eine transparente PMMA-Schicht bekannt, bei der auf der Rückseite Motive mittels Sprayverfahren aufgebracht werden.

Die DE 3525 634 A1 offenbart einen Verbundkörper mit der Schichtfolge PMMA, Trägerschicht und Siebdruckschicht. Die PMMA-Schicht und die Trägerschicht sind transparent, damit das Motiv in Form der Siebdruckschicht durch den Verbundkörper durchscheint.

Aufgabe der Erfindung ist es, einen mehrschichtigen Verbundkörper und ein Verfahren zu dessen Herstellung anzugeben, der bei relativ einfacher Herstellung eine flexible Oberflächengestaltung erlaubt.

Erfindungsgemäß wird dies dadurch gekennzeichnet, dass die Lackschicht auf die von der Trägerschicht abgewandte Oberfläche der PMMA-Schicht aufgedruckt ist. Um unterschiedliche Dekors zu erzielen, kann diese Lacksicht zunächst vollflächig aufgetragen werden und je nach gewünschtem Muster eine bereichsweise Entfernung erfolgen. Dieses Entfernen kann entweder durch mechanische Gravur oder aber mittels Lasergravur erfolgen.

Es ist aber auch möglich, bevorzugt im Siebdruckverfahren, gleich von vorne herein das endgültig gewünschte Muster nur bereichsweise auf die PMMA-Schicht aufzudrucken.

Besonders neuartige Oberflächengestaltungen lassen sich dadurch erzielen, dass die Lackschicht mattiert ausgebildet ist, während die dazwischen liegende PMMA-Schicht eine glänzende Oberfläche aufweist. Dies gibt im optischen Eindruck einen Kontrast, der durch Einfärbung der Lackschicht mittels Farbpigmenten und/oder der PMMA-Schicht noch erhöht werden kann.

Weitere Vorteile und Einzelheiten der Erfindung werden anhand der nachfolgenden Figurenbeschreibung näher erläutert.

Die Fig. 1 zeigt einen schematischen Querschnitt durch einen Teil eines Ausführungsbeispiels eines mehrschichtigen Verbundkörpers gemäß der Erfindung.

Die Fig. 2 zeigt eine Draufsicht auf ein anderes Ausführungsbeispiel eines mehrschichtigen Verbundkörpers.

Die Fig. 3 zeigt eine Draufsicht auf ein weiteres Ausführungsbeispiels eines mehrschichtigen Verbundkörpers.

Die Fig. 4 zeigt mögliche Verfahrenskombinationen zur Herstellung eines mehrschichtigen Verbundkörpers gemäß der Erfindung in einem Block-Flussdiagramm.

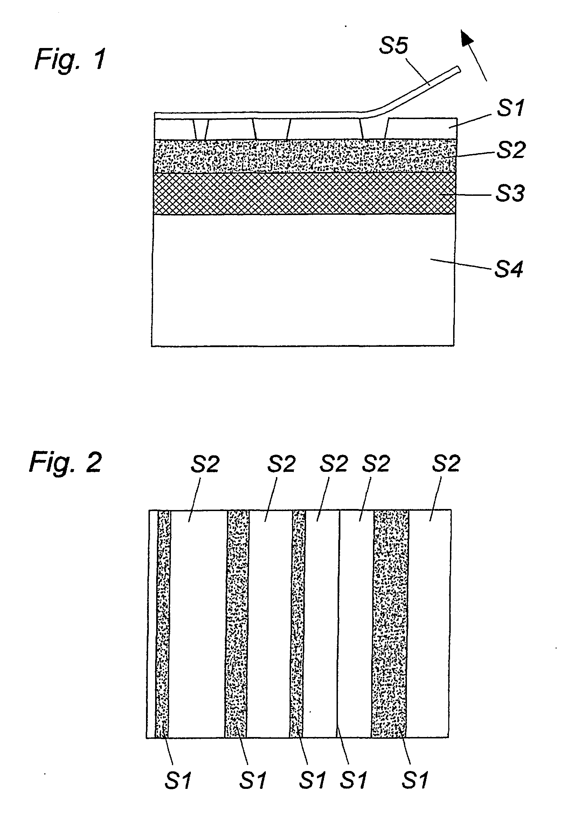

Der in Fig.1 dargestellte Verbundkörper weist eine zweilagige Trägerschicht auf, wobei die beiden Lagen mit S3 und S4 bezeichnet sind. Diese beiden Schicht S3 und S4 bestehen beispielsweise aus ABS oder aus Styrolcopolymeren, vorzugsweise SAN, ASA oder PS. Sie können auch aus Polycarbonat bestehen. Günstigerweise werden diese Schichten S3 und S4 gemeinsam mit der unten beschriebenen Schicht S2 koextrudiert. Die Farbgestaltung der Schicht S4 ist weniger kritisch, da sie durch eine farbreine, deckend mit anorganischen und/oder organischen Pigmenten, Schicht S3 abgedeckt ist. Damit ist es auch möglich, für die Schicht S4 kostengünstiges Kunststoff-Recyclat zu verwenden.

Auf der Trägerschicht S3, S4 befindet sich eine PMMA-Schicht aus Standard-PMMA, schlagzähmodifiziertem PMMA oder Mischungen davon. Diese Materialien sind die Hauptkomponente der PMMA-Schicht, d.h. dass mindestens 80 Gew.-% aus Standard-PMMA, schlagzähmodifiziertem PMMA oder Mischungen davon, besteht. Darüber hinaus kann diese Schicht S2 noch UV-Stabilisatoren oder UV-Absorber enthalten. Insbesondere kann diese Schicht S2 bevorzugt auch deckend mit anorganischen oder organischen Farbpigmenten versehen sein. Es ist aber durchaus auch möglich, dass die PMMA-Schicht im Wesentlichen glasklar ausgebildet ist. Bevorzugt weist sie jedenfalls eine glänzende Oberfläche auf.

Erfindungsgemäß ist nun auf diese PMMA-Schicht S2 eine zusätzliche Lackschicht S1 aufgedruckt, wobei am fertigen Endprodukt (wie beispielsweise Fig. 1) zwischen den Bereichen der Lackschicht S1 eine tiefer liegende Schicht, bevorzugt die Schicht S2 mit ihrer glänzenden Oberfläche für den Betrachter (hier von oben) ersichtbar ist.

Eine auf die oberste Lackschicht S1 des Verbundkörpers aufgebrachte abziehbare Schutzfolie kann vorzugsweise auflaminiert sein und nach dem Transport vor der eigentlichen Verwendung abgezogen werden, wie dies durch den Pfeil in Fig. 1 angedeutet ist.

Bevorzugt ist vorgesehen, dass die oberste Lackschicht S1 ansonsten von keiner weiteren Deckschicht abgedeckt ist. Prinzipiell ist es aber auch möglich, darüber noch eine Klarlackschicht, vorzugsweise vollflächig, aufzudrucken.

Als Lack der Lackschicht S1 kann ein lösungsmittelhältiger Lack verwendet werden, wobei als Lösungsmittel vorzugsweise organische Lösungsmittel, wie beispielsweise Esther oder Ketone, einsetzbar sind. Aber auch andere Lackschichten können je nach Anwendungsfall eingesetzt werden. Dazu gehören UV-härtende Lacke, aber vor allem auch Lackschichten, bei denen ein wasserverdünnbarer Lack, vorzugsweise auf Acrylatbasis, eingesetzt wird.

Gemäß einer bevorzugten Ausführungsform der Erfindung ist die Lackschicht mattiert ausgebildet, wobei sie günstigerweise ein Mattierungsmittel enthält. Dieses Mattierungsmittel kann beispielsweise aus Mattierungspartikeln bestehen, die organischen oder anorgansichen Ursprungs sein können. Beispielsweise eignet sich Mattierungsmittel auf der Basis von Kieselsäure und in geringem Umfang aus Talg. Die Größe dieser Mattierungsmittel ist vorzugsweise größer als die Dicke der Lackschicht S1 und liegt bevorzugt zwischen 20 µm und 60 µm. Die Lackschicht selbst weist bevorzugt eine Dicke von 1 µm bis 50 µm, besonders bevorzugt von 2 µm bis 20 µm, auf.

Alternativ ist es auch möglich, die Lackschicht durch Zusatz von Bestandteilen, die beim Aushärten des Lacks zu Schrumpfprozessen in der Lackmatrix führen, chemisch zu mattieren.

Darüber hinaus kann die Lackschicht S1 mit anorganischen und/oder organischen Pigmenten gefärbt sein, die entweder zu einer deckenden Farbschicht führen, oder aber die Lackschicht noch transparent gefärbt lassen, sodass die darunter liegende Schicht S2 noch durchschimmert. Jedenfalls lässt sich mit der Mattierung der Lackschicht S1 der glänzenden Oberfläche der darunter liegenden PMMA-Schicht S2 gegebenenfalls durch zusätzliche kontrastreiche Färbung, die aber nicht nötig ist, ein neuartiger optischer Effekt erzielen.

Was die Dicken der Schichten betrifft, so ist es bevorzugt, wenn der gesamte Verbundkörper eine Dicke zwischen 0,3 mm und 5 mm, besonders bevorzugt zwischen 0,4 mm und 1,5 mm, aufweist. Dabei macht die Trägerschicht S3, S4 den Großteil der Dicke auf. Die Schicht S3 kann bevorzugt zwischen 50 µm und 600 µm liegen, während die Schicht S4 bevorzugt zwischen 500 µm und 2900 µm liegt.

Die Größen der oben angegebenen Mattierungsmittel (mittlere Größe der Querschnittsabmessung) liegt bei einer feinen Mattierung günstigerweise zwischen 20 µm und 30 µm und bei einer groben Mattierung zwischen 50 µm und 60 µm.

Die Fig. 2 zeigt ein Beispiel einer Oberflächengestaltung bei einem mehrschichtigen Verbundkörper, insbesondere einer flexiblen Mehrschichtfolie gemäß der Erfindung. Mit "S2" ist die glänzende Oberfläche bezeichnet, die zwischen der aufgedruckten, vorzugsweise mattierten, Lackschicht S1 sichtbar ist. Im vorliegenden Fall handelt es sich um ein Streifenmuster. Aber auch andere Muster lassen sich einfach realisieren, beispielsweise im Siebdruckverfahren.

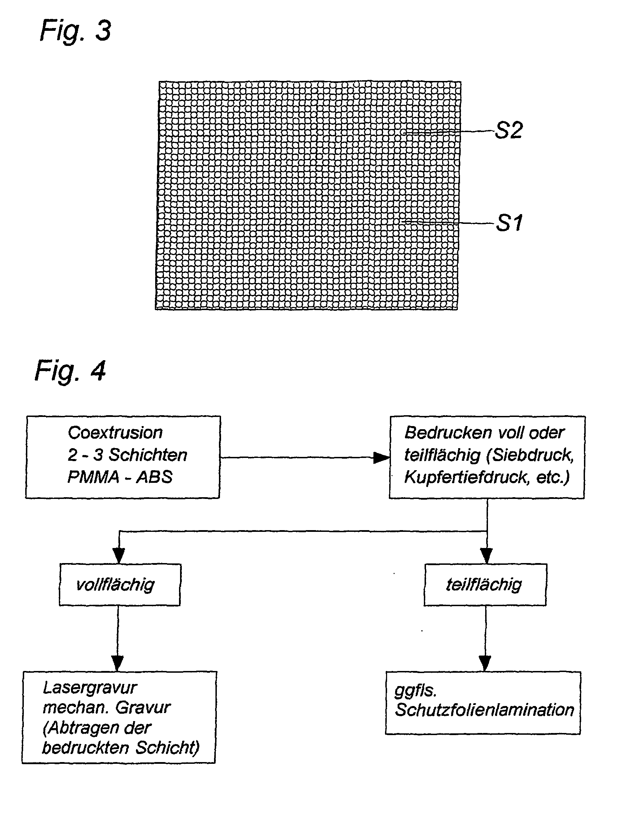

Bei dem in Fig. 3 dargestellten Ausführungsbeispiel wird ein Muster mit flächigen Kreisen als Lackschicht S1 auf die PMMA-Schicht S2 aufgedruckt.

Die Erfindung bezieht sich nicht nur auf einen mehrschichtigen Verbundkörper, sondern auch auf ein Verfahren zu dessen Herstellung. Erfindungsgemäß ist diese Verfahren dadurch gekennzeichnet, dass eine auf einem Träger befindliche PMMA-Schicht mit Lack und Ausbildung einer Lackschicht bedruckt wird.

Dabei ist es möglich, dass die Lackschicht zunächst im Wesentlichen vollflächig auf die PMMA-Schicht aufgedruckt und anschließend bereichsweise entfernt wird, sodass in den entfernten Bereichen eine darunterliegende Schicht, vorzugsweise die PMMA-Schicht frei liegt. Das Entfernen der Lackschicht kann durch mechanische Gravur oder durch Einsatz von Lasern (Lasergravur) erfolgen. Als Laser eignen sich insbesondere CO₂-Laser und YAG-Laser, wobei die CO₂-Laser mit einer Wellenlänge von 20,6 µm arbeiten und typischerweise Energien von 10 W bis 200 W aufweisen. Die YAG-Laser arbeiten typischerweise bei 1,064 µm und weisen eine Energie von 5 W bis 15 W auf.

Es ist aber auch möglich, im Bedruckungsschritt das endgültige Oberflächenmuster des Verbundskörpers festgelegt wird, in dem die PMMA-Schicht nur bereichsweise bedruckt wird.

Dazu eignet sich besonders das Siebdruckverfahren. Aber auch andere Verfahren, wie beispielsweise Tiefdruck-, Wechseldruck-, Walzdruckverfahren, Tamponverfahren oder Gießverfahren sind durchaus denkbar und möglich.

Was die Herstellung der Trägerschicht S3 und S4 betrifft, so kann diese gemeinsam mit der PMMA-Schicht (S2) koextrudiert werden.

Der erfindungsgemäße mehrschichtige Verbundkörper, insbesondere in Form einer flexiblen Folie, kann als dekorative Deckschicht, insbesondere für Möbel verwendet werden. Auch ein Einsatz zum Herstellen von dreidimensionalen Gegenständen, insbesondere durch thermisches Verformen und/oder Tiefziehen.

Die Fig. 4 zeigt mögliche Verfahrensvarianten im Überblick.

Die Erfindung ist selbstverständlich nicht auf die dargestellten Ausführungsbeispiele beschränkt, beispielsweise kann der Lack der Lackschicht S1 auch hochglänzend ausgebildet sein. Er kann auch vollflächig über der Schicht S2 angeordnet sein. Die Schicht S2 kann zwar bevorzugt mit den Schichten S3 und S4 koextrudiert werden. Es ist aber auch möglich, diese Schicht S2 nachträglich aufzulaminieren oder aufzudrucken.

## Patentansprüche

1. Mehrschichtiger Verbundkörper, insbesondere Mehrschichtfolie, mit einer mindestens einlagigen Trägerschicht und einer von dieser getragenen PMMA-Schicht, die als Hauptkomponente Standard-PMMA, schlagzähmodifiziertes PMMA oder Mischungen davon aufweist, wobei auf die PMMA-Schicht eine zumindest einlagige Lackschicht aufgedruckt ist, **dadurch gekennzeichnet, dass** die Lackschicht (S1) auf die von der Trägerschicht (S3, S4) abgewandte Oberfläche der PMMA-Schicht (S2) aufgedruckt ist.

2. Mehrschichtiger Verbundkörper nach Anspruch 1, **dadurch gekennzeichnet, dass** der Lack der Lackschicht (S1) ein lösungsmittelhältiger Lack ist, wobei als Lösungsmittel vorzugsweise organische Lösungsmittel, wie beispielsweise Ester oder Ketone, eingesetzt sind.

3. Mehrschichtiger Verbundkörper nach Anspruch 2, **dadurch gekennzeichnet, dass** als Lack der Lacksicht ein UV-härtender Lack eingesetzt ist.

4. Mehrschichtiger Verbundkörper nach Anspruch 1, **dadurch gekennzeichnet, dass** als Lack der Lackschicht (S1) ein wasserverdünnbarer Lack eingesetzt ist, vorzugsweise auf der Basis von Polyurethan, Epoxydharz oder Acrylat.

5. Mehrschichtiger Verbundkörper nach einem der Ansprüche 1 bis 4, **dadurch gekennzeichnet, dass** die Lackschicht (S1) eine Dicke von 1 µm bis 50 µm, vorzugsweise von 2 µm bis 20 µm, aufweist.

6. Mehrschichtiger Verbundkörper nach einem der Ansprüche 1 bis 5, **dadurch gekennzeichnet, dass** die Lackschicht (S1) die darunterliegende PMMA-Schicht (S2) nur bereichsweise, also nicht vollflächig abdeckt.

7. Mehrschichtiger Verbundkörper nach einem der Ansprüche 1 bis 6, **dadurch gekennzeichnet, dass** die Lackschicht (S1) mattiert ausgebildet ist.

8. Mehrschichtiger Verbundkörper nach Anspruch 7, **dadurch gekennzeichnet, dass** der Lack der Lackschicht (S1) ein Mattierungsmittel enthält.

9. Mehrschichtiger Verbundkörper nach Anspruch 7 oder 8, **dadurch gekennzeichnet, dass** in der Lackschicht (S1) Mattierungspartikel verteilt sind.

10. Mehrschichtiger Verbundkörper nach Anspruch 9, **dadurch gekennzeichnet, dass** die Mattierungspartikel organisch oder anorganisch - vorzugsweise auf der Basis von Kieselsäure und gegebenenfalls Talg - sind.

11. Mehrschichtiger Verbundkörper nach Anspruch 9 oder 10, **dadurch gekennzeichnet, dass** die Größe der Mattierungspartikel zwischen 20 µm und 60 µm liegt, und vorzugsweise größer ist als die Dicke der Lackschicht (S1).

12. Mehrschichtiger Verbundkörper nach Anspruch 7 oder 8, **dadurch gekennzeichnet, dass** die Lackschicht (S1) durch Zusatz von Bestandteilen, die beim Aushärten des Lacks zu Schrumpfprozessen in der Lackmatrix führen, chemisch mattiert sind.

13. Mehrschichtiger Verbundkörper nach einem der Ansprüche 1 bis 12, **dadurch gekennzeichnet, dass** die Lackschicht (S1) mit anorganischen und/oder organischen Pigmenten gefärbt ist.

14. Mehrschichtiger Verbundkörper nach einem der Ansprüche 1 bis 13, **dadurch gekennzeichnet, dass** die Lackschicht (S1) deckend ausgebildet ist.

15. Mehrschichtiger Verbundkörper nach einem der Ansprüche 1 bis 13, **dadurch gekennzeichnet, dass** die Lackschicht (S1) transparent ausgebildet ist.

16. Mehrschichtiger Verbundkörper nach einem der Ansprüche 1 bis 15, **dadurch gekennzeichnet, dass** die PMMA-Schicht (S2) eine oder mehrere der folgenden Komponenten enthält
- anorganische oder organische Farbpigmente, die der PMMA-Schicht (S2) vorzugsweise eine deckende Farbe verleihen,
- UV-Stabilisatoren,
- UV-Absorber,
- Mattierungsmittel organischen oder anorganischen Ursprungs.

17. Mehrschichtiger Verbundkörper nach einem der Ansprüche 1 bis 16, **dadurch gekennzeichnet, dass** die PMMA-Schicht (S2) eine Dicke von 20 µm bis 600 µm aufweist.

18. Mehrschichtiger Verbundkörper nach einem der Ansprüche 1 bis 17, **dadurch gekennzeichnet, dass** die PMMA-Schicht (S2) eine glänzende Oberfläche aufweist.

19. Mehrschichtiger Verbundkörper nach einem der Ansprüche 1 bis 18, **dadurch gekennzeichnet, dass** die Trägerschicht (S3, S4) zumindest eine Lage aus ABS oder aus Styrolcopolymeren - vorzugsweise SAN, ASA, oder PS - oder aus Polycarbonat aufweist.

20. Mehrschichtiger Verbundkörper nach einem der Ansprüche 1 bis 19, **dadurch gekennzeichnet, dass** die der PMMA-Schicht (S2) zugewandten Seite eine Lage mit anorganischen oder organischen Farbpigmenten aufweist, die dieser Lage vorzugsweise eine deckende Farbe verleihen.

21. Mehrschichtiger Verbundkörper nach einem der Ansprüche 1 bis 20, **dadurch gekennzeichnet, dass** zumindest zweilagig ausgebildet ist, vorzugsweise auf der PMMA-Schicht (S2) abgewandten Seite eine Lage aufweist, die wenigstens teilweise aus Kunststoff-Recyclat hergestellt ist.

22. Mehrschichtiger Verbundkörper nach einem der Ansprüche 1 bis 21, **dadurch gekennzeichnet, dass** die Dicke des gesamten Verbundkörpers zwischen 0,3 mm und
5 mm, vorzugsweise zwischen 0,4 mm und 1,5 mm beträgt.

23. Verfahren zum Herstellen eines mehrschichtigen Verbundkörpers, insbesondere nach einem der Ansprüche 1 bis 22, **dadurch gekennzeichnet, dass** zunächst eine zumindest einlagige Trägerschicht (S3, S4) mit einer PMMA-Schicht (S2), die als Hauptkomponente Standard-PMMA, schlagzähmodifiziertes PMMA oder Mischungen davon aufweist, hergestellt wird, welche anschließend mit Lack unter Ausbildung einer Lackschicht (S1) bedruckt wird.

24. Verfahren zum Herstellen eines mehrschichtigen Verbundkörpers nach Anspruch 23, **dadurch gekennzeichnet, dass** die Lackschicht (S1) zunächst im Wesentlichen vollflächig auf die PMMA-Schicht (S2) aufgedruckt und anschließend bereichsweise entfernt wird, sodass in den entfernten Bereichen eine darunterliegende Schicht, vorzugsweise die PMMA-Schicht (S2) frei liegt.

25. Verfahren zum Herstellen eines mehrschichtigen Verbundkörpers nach Anspruch 23 oder 24, **dadurch gekennzeichnet, dass** ein Entfernen der - vorzugsweise ausgehärteten - Lackschicht (S1) durch mechanische Gravur erfolgt.

26. Verfahren zum Herstellen eines mehrschichtigen Verbundkörpers nach Anspruch 23 oder 24, **dadurch gekennzeichnet, dass** ein Entfernen der - vorzugsweise ausgehärteten - Lackschicht (S1) durch Lasergravur erfolgt, wobei als Laser vorzugsweise CO₂-Laser oder YAG-Laser eingesetzt werden.

27. Verfahren zum Herstellen eines mehrschichtigen Verbundkörpers nach Anspruch 23, **dadurch gekennzeichnet, dass** im Bedruckungsschritt das endgültige Oberflächenmuster des Verbundskörpers festgelegt wird, in dem die PMMA-Schicht (S2) nur bereichsweise bedruckt wird.

28. Verfahren zum Herstellen eines mehrschichtigen Verbundkörpers nach einem der Ansprüche 23 bis 27, **dadurch gekennzeichnet, dass** das Aufdrucken der Lackschicht (S1) im Siebdruckverfahren, vorzugsweise im Rollensiebdruck oder Bogen-zu-Bogen-Siebdruck, erfolgt.

29. Verfahren zum Herstellen eines mehrschichtigen Verbundkörpers nach Anspruch 23 bis 27, **dadurch gekennzeichnet, dass** im Tiefdruck, Wechseldruck, Walzverfahren, Tampondruckverfahren oder Gießverfahren erfolgt.

30. Verfahren zum Herstellen eines mehrschichtigen Verbundkörpers nach einem der Ansprüche 23 bis 29, **dadurch gekennzeichnet, dass** die Lage(n) der Trägerschicht (S3,S4) und die PMMA-Schicht (S2) koextrudiert werden.

31. Verfahren zum Herstellen eines mehrschichtigen Verbundkörpers nach einem der Ansprüche 1 bis 30, **dadurch gekennzeichnet, dass** auf die oberste Lackschicht (S1) des Verbundkörpers eine abziehbare Schutzfolie (S5) aufgebraucht, vorzugsweise auflaminiert wird.

32. Verwendung des mehrschichtigen Verbundkörpers nach einem der Ansprüche 1 bis 22 als dekorative Deckschicht insbesondere für Möbel.

33. Verwendung des mehrschichtigen Verbundkörpers 1 bis 22 zum Herstellen eines dreidimensionalen Gegenstandes insbesondere durch thermisches Verformen und/oder Tiefziehen.

## Claims

1. A multi-layer composite body, in particular a multi-layer film, comprising an at least single-layer carrier layer and a PMMA layer which is carried thereby and which as its main component has standard PMMA, impact-resistant modified PMMA or mixtures thereof, wherein an at least single-layer lacquer layer is printed on to the PMMA layer, **characterised in that** the lacquer layer (S1) is printed on to the surface of the PMMA layer (S2), which is remote from the carrier layer (S3, S4).

2. A multi-layer composite body according to claim 1 **characterised in that** the lacquer of the lacquer layer (S1) is a solvent-bearing lacquer, wherein preferably organic solvents such as for example esters or ketones are used as the solvent.

3. A multi-layer composite body according to claim 2 **characterised in that** a UV-hardening lacquer is used as the lacquer of the lacquer layer.

4. A multi-layer composite body according to claim 1 **characterised in that** a water-dilutable lacquer, preferably based on polyurethane, epoxy resin or acrylate, is used as the lacquer of the lacquer layer (S 1).

5. A multi-layer composite body according to one of claims 1 to 4 **characterised in that** the lacquer layer (S1) is of a thickness of 1 µm to 50 µm, preferably 2 µm to 20 µm.

6. A multi-layer composite body according to one of claims 1 to 5 **characterised in that** the lacquer layer (S1) covers the subjacent PMMA layer (S2) only region-wise, therefore not over the full surface area involved.

7. A multi-layer composite body according to one of claims 1 to 6 **characterised in that** the lacquer layer (S1) is of a matted nature.

8. A multi-layer composite body according to claim 7 **characterised in that** the lacquer of the lacquer layer (S 1) contains a matting agent.

9. A multi-layer composite body according to claim 7 or claim 8 **characterised in that** matting particles are distributed in the lacquer layer (S1).

10. A multi-layer composite body according to claim 9 **characterised in that** the matting particles are organic or inorganic - preferably on the basis of silicic acid and optionally tallow.

11. A multi-layer composite body according to claim 9 or claim 10 **characterised in that** the size of the matting particles is between 20 µm and 60 µm, and preferably is greater than the thickness of the lacquer layer (S 1).

12. A multi-layer composite body according to claim 7 or claim 8 **characterised in that** the lacquer layer (S1) is chemically matted by the addition of constituents which upon hardening of the lacquer result in shrinkage processes in the lacquer matrix.

13. A multi-layer composite body according to one of claims 1 to 12 **characterised in that** the lacquer layer (S1) is coloured with inorganic and/or organic pigments.

14. A multi-layer composite body according to one of claims 1 to 13 **characterised in that** the lacquer layer (S1) is opaque.

15. A multi-layer composite body according to one of claims 1 to 13 **characterised in that** the lacquer layer (S1) is transparent.

16. A multi-layer composite body according to one of claims 1 to 15 **characterised in that** the PMMA layer (S2) contains one or more of the following components:
- inorganic or organic colouring pigments, preferably making the PMMA-layer (S2) opaque.
- UV-stabilisers,
- UV-absorbers, and
- matting agents of organic or inorganic origin.

17. A multi-layer composite body according to one of claims 1 to 16 **characterised in that** the PMMA layer (S2) is of a thickness of 20 µm to 600 µm.

18. A multi-layer composite body according to one of claims 1 to 17 **characterised in that** the PMMA layer (S2) has a shiny surface.

19. A multi-layer composite body according to one of claims 1 to 18 **characterised in that** the carrier layer (S3, S4) has at least one layer of ABS or styrene copolymers - preferably SAN, ASA, or PS - or polycarbonate.

20. A multi-layer composite body according to one of claims 1 to 19 **characterised in that** the side which is towards the PMMA layer (S2) has a layer with inorganic or organic colouring pigments, preferably making this layer opaque.

21. A multi-layer composite body according to one of claims 1 to 20 **characterised in that** it is at least of a double-layer configuration and it has a layer which is produced at least partly from recycled plastic material, which is preferably on the side remote from the PMMA-layer (S2).

22. A multi-layer composite body according to one of claims 1 to 20 **characterised in that** the thickness of the overall composite body is between 0.3 mm and 5 mm, preferably between 0,4 mm and 1,5 mm.

23. Process for the production of a multi-layer composite body, preferably according to one of claims 1 to 20, **characterised in that** firstly an at least single-layer carrier layer (S3, S4) is produced with a PMMA layer (S2) which as its main component has standard PMMA, impact-resistant modified PMMA or mixtures thereof, which is then printed upon with lacquer, forming a lacquer layer (S1).

24. A process for the production of a multi-layer composite body according to claim 23 **characterised in that** the lacquer layer (S1) is first printed substantially over the full surface area on to the PMMA layer (S2) and then removed region-wise so that in the removed regions a subjacent layer, preferably the PMMA layer (S2), is exposed.

25. A process for the production of a multi-layer composite body according to claim 23 or claim 24 **characterised in that** removal of the - preferably hardened - lacquer layer (S1) is effected by mechanical engraving.

26. A process for the production of a multi-layer composite body according to claim 23 or claim 24 **characterised in that** removal of the - preferably hardened - lacquer layer is effected by laser engraving, wherein preferably CO₂-lasers or YAG-lasers are used as the laser.

27. A process for the production of a multi-layer composite body according to claim 23 **characterised in that** the definitive surface pattern of the composite body is established in the printing step by the PMMA layer (S2) being printed on only in region-wise manner.

28. A process for the production of a multi-layer composite body according to one of claims 23 to 27 **characterised in that** the operation of printing on the lacquer layer (S1) is effected using a screen printing process, preferably a roller screen printing or sheet to sheet screen printing process.

29. A process for the production of a multi-layer composite body according to one of claims 23 to 27 **characterised in that** it is effected using one of intaglio printing, alternate printing, cylinder printing, tampon printing processes and casting processes.

30. A process for the production of a multi-layer composite body according to one of claims 23 to 29 **characterised in that** the layer or layers of the carrier layer (S3, S4) and the PMMA layer (S2) are coextruded.

31. A process for the production of a multi-layer composite body according to one of claims 1 to 30 **characterised in that** a protective film (S5) which can be pulled off is applied to the uppermost lacquer layer (S1) of the composite body, preferably laminated.

32. Use of the multi-layer composite body according to one of claims 1 to 22 as a decorative cover layer in particular for furniture.

33. Use of the multi-layer composite body according to one of claims 1 to 22 for the production of a three-dimensional object, in particular by thermal shaping and/or deep drawing.

## Revendications

1. Corps composite à couches multiples, en particulier film à couches multiples, comprenant une couche porteuse à au moins une épaisseur et une couche de PMMA portée par celle-ci, qui comprend à titre de composante principale du PMMA standard, du PMMA modifié pour présenter une résistance aux impacts, ou des mélanges de ceux-ci, dans lequel une couche de laque, constituée d'au moins une épaisseur, est imprimée sur la couche de PMMA, **caractérisé en ce que** la couche de laque (S1) est imprimée sur la surface de la couche de PMMA (S2) détournée de la couche porteuse (S3, S4).

2. Corps composite à couches multiples selon la revendication 1, **caractérisé en ce que** la laque de la couche de laque (S1) est une laque contenant un solvant, et dans lequel un solvant de préférence organique, comme par exemple un ester ou une cétone, est employé à titre de solvant.

3. Corps composite à couches multiples selon la revendication 2, **caractérisé en ce qu'**une laque durcissant aux rayons UV est employée à titre de laque pour la couche de laque.

4. Corps composite à couches multiples selon la revendication 1, **caractérisé en ce qu'**une laque soluble à l'eau est employée à titre de laque pour la couche de laque (S1), de préférence à base de polyuréthane, de résine époxy ou d'acrylate.

5. Corps composite à couches multiples selon l'une des revendications 1 à 4, **caractérisé en ce que** la couche de laque (S1) possède une épaisseur de 1 µm à 50 µm, de préférence de 2 µm à 20 µm.

6. Corps composite à couches multiples selon l'une des revendications 1 à 5, **caractérisé en ce que** la couche de laque (S1) recouvre la couche de PMMA (S2) sous-jacente uniquement par zones, donc pas sur la totalité de sa surface.

7. Corps composite à couches multiples selon l'une des revendications 1 à 6, **caractérisé en ce que** la couche de laque (S1) est réalisée mate.

8. Corps composite à couches multiples selon la revendication 7, **caractérisé en ce que** la laque de la couche de laque (S1) contient un agent conférant un aspect mat.

9. Corps composite à couches multiples selon la revendication 7 ou 8, **caractérisé en ce que** des particules conférant un aspect mat sont réparties dans la couche de laque (S1).

10. Corps composite à couches multiples selon la revendication 9, **caractérisé en ce que** les particules conférant un aspect mat sont organiques ou inorganiques, de préférence à base de silice ou de suif.

11. Corps composite à couches multiples selon la revendication 9 ou 10, **caractérisé en ce que** la taille des particules conférant un aspect mat est située entre 20 µm et 60 µm, et est de préférence supérieure à l'épaisseur de la couche de laque (S1).

12. Corps composite à couches multiples selon la revendication 7 ou 8, **caractérisé en ce que** la couche de laque (S1) est rendue mate par voie chimique, par addition de composants qui mènent, lors du durcissement de la laque, à des processus de rétraction dans la matrice de laque.

13. Corps composite à couches multiples selon l'une des revendications 1 à 12, **caractérisé en ce que** la couche de laque (S1) est colorée avec des pigments inorganiques et/ou organiques.

14. Corps composite à couches multiples selon l'une des revendications 1 à 13, **caractérisé en ce que** la couche de laque (S1) est réalisée de manière couvrante.

15. Corps composite à couches multiples selon l'une des revendications 1 à 13, **caractérisé en ce que** la couche de laque (S1) est réalisée de façon transparente.

16. Corps composite à couches multiples selon l'une des revendications 1 à 15, **caractérisé en ce que** la couche de PMMA (S2) contient un ou plusieurs des composants suivants :
- des pigments de couleur inorganiques ou organiques, qui confèrent à la couche de PMMA (S2) de préférence une couleur couvrante,
- des stabilisateurs vis-à-vis des rayons UV,
- des agents absorbants vis-à-vis des rayons UV,
- des agents d'origine organique ou inorganique pour conférer un aspect mat.

17. Corps composite à couches multiples selon l'une des revendications 1 à 16, **caractérisé en ce que** la couche de PMMA (S2) présente une épaisseur de 20 µm à 600 µm.

18. Corps composite à couches multiples selon l'une des revendications 1 à 17, **caractérisé en ce que** la couche de PMMA (S2) présente une surface luisante.

19. Corps composite à couches multiples selon l'une des revendications 1 à 18, **caractérisé en ce que** la couche porteuse (S3, S4) comprend au moins une épaisseur de ABS ou de copolymère de styrène, de préférence SAN, ASA, ou PS, ou bien de polycarbonate.

20. Corps composite à couches multiples selon l'une des revendications 1 à 19, **caractérisé en ce que** le côté tourné vers la couche de PMMA (S2) comprend une épaisseur avec des pigments de couleur inorganiques ou organiques, qui confèrent à cette épaisseur de préférence une couleur couvrante.

21. Corps composite à couches multiples selon l'une des revendications 1 à 20, **caractérisé en ce qu'**il est réalisé avec au moins deux couches, et comprend de préférence sur le côté détourné de la couche de PMMA (S2) une épaisseur qui est fabriquée au moins partiellement en matière plastique recyclée.

22. Corps composite à couches multiples selon l'une des revendications 1 à 21, **caractérisé en ce que** l'épaisseur de la totalité du corps composite est entre 0,3 mm et 5 mm, de préférence entre 0,4 mm et 1,5 mm.

23. Procédé pour fabriquer un corps composite à couches multiples, en particulier selon l'une des revendications 1 à 22, **caractérisé en ce que** l'on réalise tout d'abord une couche porteuse (S3, S4), à au moins une épaisseur, avec une couche de PMMA (S2) qui contient à titre de composante principale du PMMA standard, du PMMA modifié pour résister aux impacts, ou des mélanges de ceux-ci, laquelle est ensuite imprimée avec de la laque en formant une couche de laque (S1).

24. Procédé pour fabriquer un corps composite à couches multiples selon la revendication 23, **caractérisé en ce que** la couche de laque (S1) est imprimée tout d'abord sensiblement sur toute la surface sur la couche de PMMA (S2) et est supprimée ensuite par zones, de sorte que dans les zones supprimées une couche sous-jacente, de préférence la couche de PMMA (S2) est dégagée.

25. Procédé pour fabriquer un corps composite à couches multiples selon la revendication 23 ou 24, **caractérisé en ce qu'**une suppression de la couche de laque (S1), de préférence durcie, est effectuée par gravure mécanique.

26. Procédé pour fabriquer un corps composite à couches multiples selon la revendication 23 ou 24, **caractérisé en ce qu'**une suppression de la couche de laque (S1), de préférence durcie, est effectuée par gravure au laser, de sorte que l'on emploie comme laser de préférence un laser au CO2 ou un laser YAG.

27. Procédé pour fabriquer un corps composite à couches multiples selon la revendication 23, **caractérisé en ce que** lors de l'étape d'impression, le motif de surface définitif du corps composite est fixé du fait que la couche de PMMA (S2) est imprimée uniquement par zones.

28. Procédé pour fabriquer un corps composite à couches multiples selon l'une des revendications 23 à 27, **caractérisé en ce que** l'impression de la couche de laque (S1) est effectuée par un procédé de sérigraphie, de préférence par sérigraphie au rouleau ou par sérigraphie de feuille à feuille.

29. Procédé pour fabriquer un corps composite à couches multiples selon l'une des revendications 23 à 27, **caractérisé en ce qu'**il est effectué suivant un procédé par embossage, un procédé par application de pression alternée, un procédé de laminage, un procédé d'impression au tampon, ou un procédé de coulée.

30. Procédé pour fabriquer un corps composite à couches multiples selon l'une des revendications 23 à 29, **caractérisé en ce que** les épaisseurs de la couche porteuse (S3, S4) et de la couche de PMMA (S2) sont coextrudées.

31. Procédé pour fabriquer un corps composite à couches multiples selon l'une des revendications 1 à 30, **caractérisé en ce qu'**un film protecteur à peler (S5) est appliqué sur la couche de laque la plus haute (S1) du corps composite.

32. Utilisation du corps composite à couches multiples selon l'une des revendications 1 à 22 à titre de couche de couverture décorative, en particulier pour des meubles.

33. Utilisation du corps composite à couches multiples selon l'une des revendications 1 à 22 pour réaliser un objet tridimensionnel, en particulier par déformation et/ou par emboutissage thermique.
